(19)

Europäisches
Patentamt
European
Patent Office
Office européen
des brevets

(11) **EP 4 586 740 A1**

(12) **EUROPEAN PATENT APPLICATION**
published in accordance with Art. 153(4) EPC

(43) Date of publication:
**16.07.2025 Bulletin 2025/29**

(21) Application number: **23894918.4**

(22) Date of filing: **15.11.2023**

(51) International Patent Classification (IPC):
*H05B 6/12* (2006.01)     *H05B 6/06* (2006.01)

(52) Cooperative Patent Classification (CPC):
**H05B 6/06; H05B 6/12**

(86) International application number:
**PCT/KR2023/018387**

(87) International publication number:
**WO 2024/111989 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.11.2022 JP 2022186227**

(71) Applicant: **Samsung Electronics Co., Ltd.
Suwon-si, Gyeonggi-do 16677 (KR)**

(72) Inventors:
• **YOSHIDA, Taro
Yokohama-shi, Kanagawa 230--0027 (JP)**
• **NISHIKOORI, Nobuharu
Yokohama-shi, Kanagawa 230--0027 (JP)**

(74) Representative: **Walaski, Jan Filip et al
Venner Shipley LLP
200 Aldersgate
London EC1A 4HD (GB)**

(54) **INDUCTION HEATING DEVICE AND METHOD FOR DETECTING SHIFT OF OBJECT TO BE HEATED ON HEATING COIL**

(57) Provided is an induction heating device configured to output, to an inverter, an inverter control signal for controlling the inverter, obtain a detection signal corresponding to a detected alternating current, measure, as an actual phase, a delay in an input time point at which the detection signal corresponding to the inverter control signal is obtained relative to an output time point at which the inverter control signal is output, calculate, based on the inverter control signal, a reference phase which is a delay in the input time point relative to the output time point in a state where the object to be heated is misaligned above the heating coil, calculate a threshold by subtracting a predetermined offset from the reference phase, and determine whether the object to be heated is misaligned above the heating coil by comparing the actual phase with the threshold.

FIG. 2

EP 4 586 740 A1

## Description

### Technical Field

The present disclosure relates to an induction heating device for detecting a misalignment of an object to be heated above a heating coil.

### Background Art

An induction heating device may be used in an induction heating (or IH) cooker or the like that heats an object to be heated, such as a cooking pot. Some induction heating devices are capable of performing a function of detecting a misalignment of an object to be heated above a heating coil (hereinafter also referred to as a pot misalignment).

For example, an induction heating device may detect a pot misalignment by using a sensor. In this case, a problem occurs in that the induction heating device becomes more expensive due to the inclusion of the sensor.

In another example, an induction heating device may detect a pot misalignment by calculating a determination value for determining the pot misalignment based on a driving frequency or the like without using a sensor, and comparing the determination value with a predetermined threshold.

However, because the driving frequency of the heating coil changes depending on a material or size of the pot, or a target heating power, it is necessary to set conditions such as thresholds, to cover all usage situations, in order to accurately detect a pot misalignment. Therefore, a method based on a driving frequency is difficult to implement appropriately for all usage situations.

### Disclosure of Invention

### Solution to Problem

An induction heating device according to an embodiment of the present disclosure may include at least one processor, a heating coil configured to inductively heat an object to be heated when an alternating current flows therethrough, an inverter configured to convert a direct current voltage into an alternating current voltage by turning on or off a plurality of switching devices therein and supply the alternating current voltage to the heating coil, and a current detector configured to detect an alternating current flowing from the inverter to the heating coil and output a detection signal corresponding to the detected alternating current.

In an embodiment, the at least one processor may be configured to output an inverter control signal for controlling the inverter to the inverter.

In an embodiment, the at least one processor may be configured to obtain the detection signal corresponding to the detected alternating current.

In an embodiment, the at least one processor may be configured to measure, as an actual phase, a delay in an input time point at which the detection signal corresponding to the inverter control signal is obtained relative to an output time point at which the inverter control signal is output.

In an embodiment, the at least one processor may be configured to calculate, based on the inverter control signal, a reference phase which is a delay in the input time point relative to the output time point in a state where the object to be heated is misaligned above the heating coil.

In an embodiment, the at least one processor may calculate a threshold by subtracting a predetermined offset from the reference phase.

In an embodiment, the at least one processor may be configured to determine whether the object to be heated is misaligned above the heating coil by comparing the actual phase with the threshold.

A method, performed by an induction heating device, of detecting a misalignment of an object to be heated above a heating coil, according to an embodiment of the present disclosure, may include outputting, to an inverter, an inverter control signal for controlling the inverter.

In an embodiment, the method may include obtaining a detection signal corresponding to an alternating current flowing from the inverter to the heating coil.

In an embodiment, the method may include measuring, as an actual phase, a delay in an input time point at which the detection signal corresponding to the inverter control signal is obtained relative to an output time point at which the inverter control signal is output.

In an embodiment, the method may include calculating, based on the inverter control signal, a reference phase which is a delay in the input time point relative to the output time point in a state where the object to be heated is misaligned above the heating coil.

In an embodiment, the method may include calculating a threshold by subtracting a predetermined offset from the reference phase.

In an embodiment, the method may include determining whether the object to be heated is misaligned above the heating coil by comparing the actual phase with the threshold.

**Brief Description of Drawings**

FIG. 1 is a diagram illustrating an induction heating system according to an embodiment of the present disclosure.

FIG. 2 is a schematic diagram illustrating a configuration of an induction heating device according to an embodiment of the present disclosure.

FIG. 3 is a reference diagram illustrating a control mode of an inverter controller, according to an embodiment of the present disclosure.

FIG. 4 is a reference diagram illustrating operation of a phase measurement unit according to an embodiment of the present disclosure.

FIG. 5 is a reference diagram illustrating operation of a determination unit according to an embodiment of the present disclosure.

FIG. 6 is a graph illustrating a reference phase calculated by a threshold calculator, according to an embodiment of the present disclosure.

FIG. 7 is a flowchart illustrating operations of a control device, according to an embodiment of the present disclosure.

FIG. 8 is a block diagram of a configuration of an induction heating device according to an embodiment of the present disclosure.

FIG. 9 is a detailed block diagram illustrating functions of an induction heating device, according to an embodiment of the present disclosure.

**Mode for the Invention**

Hereinafter, an induction heating device according to an embodiment of the present disclosure is described with reference to the drawings.

In the present disclosure, an object to be heated being misaligned above the heating coil may be understood as a state in which the object to be heated is in a position where heating power of the heating coil is not completely transferred to the object to be heated. For example, when an area of a bottom surface of the object to be heated is greater than a heating range (or a cooking zone) of the heating coil, the object to be heated being misaligned above the heating coil may be understood as a state in which the bottom surface of the object to be heated does not overlap at least a portion (e.g., 10 %) of the heating range (or cooking zone) of the heating coil. For example, when the area of the bottom surface of the object to be heated is smaller than a heating range (or a cooking zone) of the heating coil, the object to be heated being misaligned above the heating coil may be understood as a state in which the bottom surface of the object to be heated does not overlap at least a portion (e.g., 10 %) of the heating range (or cooking zone) of the heating coil.

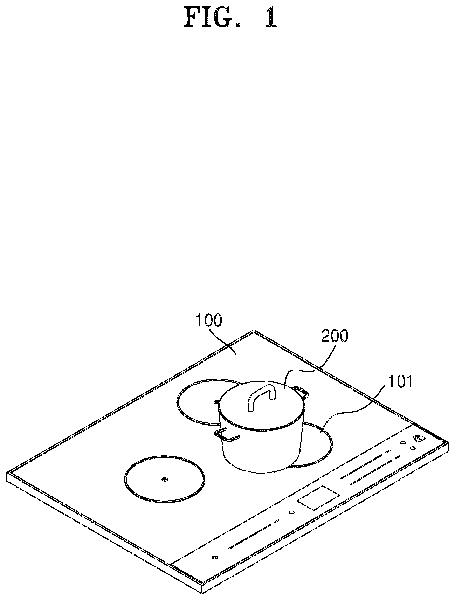

FIG. 1 is a diagram illustrating an induction heating system according to an embodiment of the present disclosure.

Referring to FIG. 1, the induction heating system according to the embodiment of the present disclosure may include an induction heating device 100 and an object 200 to be heated. However, all of the components shown in FIG. 1 are not essential components. The induction heating system may be implemented with more components than those shown in FIG. 1, or may be implemented with fewer components than those. For example, the induction heating system may be implemented with the induction heating device 100, the object 200 to be heated, and a server (not shown). Hereinafter, components of the induction heating system are described.

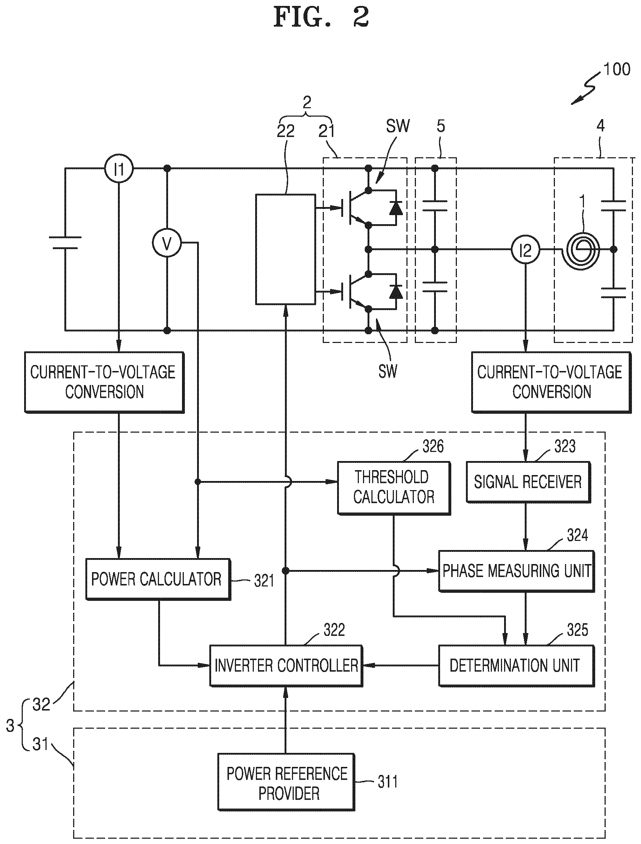

In an embodiment, the induction heating device 100 may be a device that heats an element to be heated (e.g., the object 200 to be heated) located on a top plate by using a heating coil (e.g., 1 of FIG. 2). The induction heating device 100 may be expressed as an induction range or an electric range.

In an embodiment, the induction heating device 100 may include a plurality of heating coils. For example, when the top plate of the induction heating device 100 includes a plurality of cooking zones 101, the induction heating device 100 may include a plurality of heating coils respectively corresponding to the plurality of cooking zones 101. Furthermore, the induction heating device 100 may include a high-power cooking zone with a first heating coil provided on an inner side and a second heating coil provided on an outer side. The high-power cooking zone may include three or more heating coils.

In an embodiment, the top plate of the induction heating device 100 may be formed of tempered glass such as ceramic glass so as not to be easily broken. In addition, a guide mark may be provided on the top plate of the induction heating device 1000 to guide a cooking zone where the object 200 to be heated is to be located.

In an embodiment, the induction heating device 100 may include a communication interface for communicating with an external device. For example, the induction heating device 100 may communicate with the server via the communication interface. The communication interface may include a short-range communication interface (e.g., a near field communication (NFC) interface, a Bluetooth communication interface, a Bluetooth Low Energy (BLE) communication interface, etc.), a mobile communication interface, etc.

In an embodiment, the induction heating device 100 may display information related to the object 200 to be heated via a user interface. For example, when the induction heating device 100 detects a misalignment of the object 200 to be heated, the induction heating device 100 may display, on a display included in the user interface, a message or icon indicating that the object 200 to be heated is misaligned from a cooking zone.

In an embodiment, the object 200 to be heated may be a device for heating contents within the object 200 to be heated. The contents in the object 200 to be heated may be liquids such as water, tea, coffee, soup, juice, wine, oil, etc., or solids such as butter, meat, vegetables, bread, rice, etc., but are not limited thereto.

The object 200 to be heated may be a general IH vessel, such as a pot, a frying pan, or a steamer, or may be a small home appliance, such as an electric kettle, a teapot, a coffee machine (or a coffee dripper), a toaster, a blender, an electric rice cooker, an oven, or an air fryer, but is not limited thereto. The object 200 to be heated may include a cooker device. The cooker device may be a device into or from which a general IH vessel may be inserted or removed. According to an embodiment, the cooker device may be a device capable of automatically cooking contents according to a recipe. The cooker device may also be named a pot, a rice cooker, or a steamer depending on its intended use. For example, when an inner pot for cooking rice is inserted into the cooker device, the cooker device may be referred to as a rice cooker.

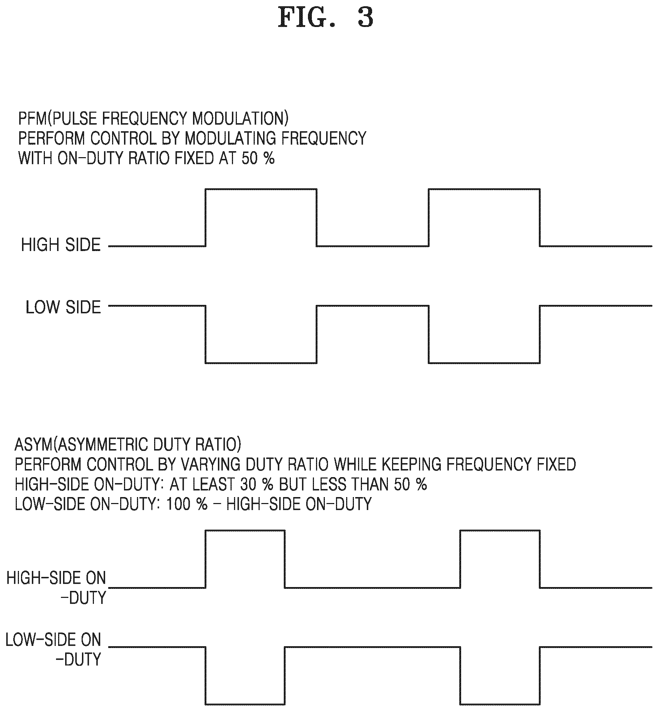

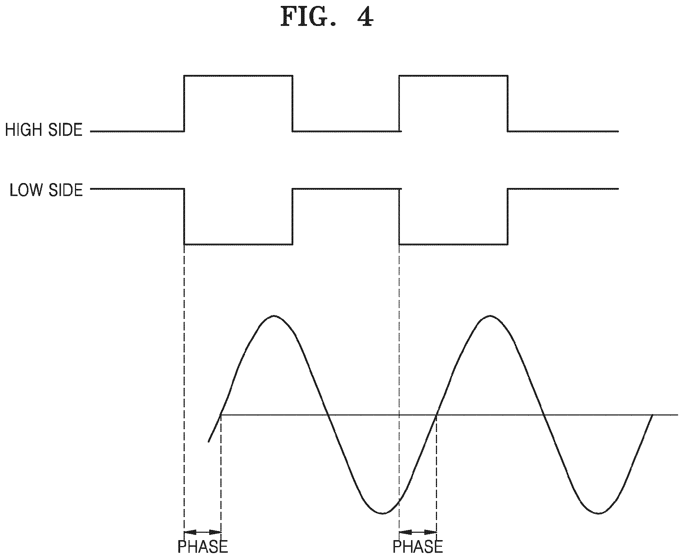

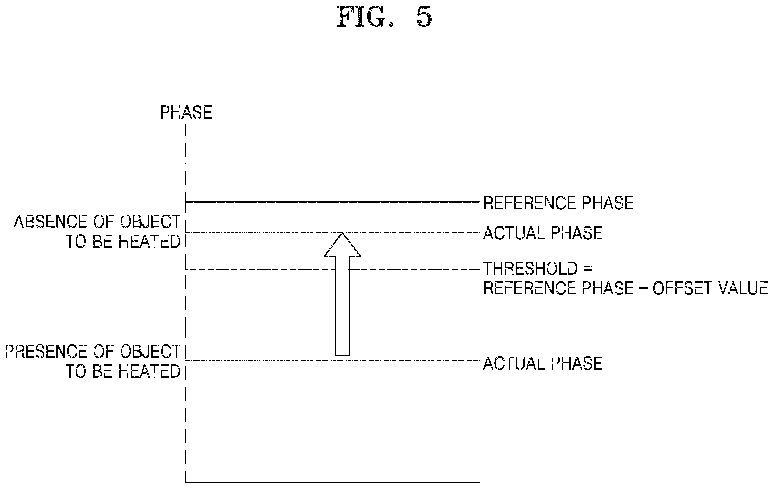

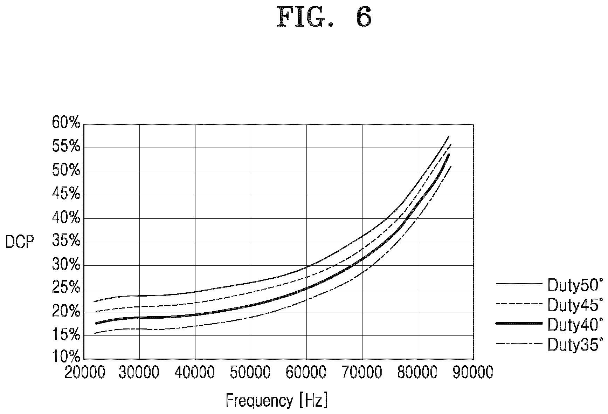

FIG. 2 is a schematic diagram illustrating a configuration of the induction heating device 100 according to an embodiment of the present disclosure, FIG. 3 is a reference diagram illustrating a control mode of an inverter controller 322, according to an embodiment of the present disclosure, FIG. 4 is a reference diagram illustrating operation of a phase measurement unit 324 according to an embodiment of the present disclosure, FIG. 5 is a reference diagram illustrating operation of a determination unit 325 according to an embodiment of the present disclosure, and FIG. 6 is a graph illustrating a reference phase calculated by a threshold calculator 326, according to an embodiment of the present disclosure.

In an embodiment, the induction heating device 100 is used, for example, in an IH cooker or the like, and may inductively heat a an object to be heated, such as a cooking pot.

In an embodiment, as illustrated in FIG. 2, the induction heating device 100 may include a heating coil 1 that inductively heats an object to be heated when an alternating current (AC) flows through the heating coil 1, an inverter 2 that supplies power to the heating coil 1, and a control device 3 that controls the inverter 2.

The induction heating device 100 may further include, as illustrated in FIG. 2, a resonant circuit 4 including a resonant condenser connected in series to the heating coil 1, a first current detector detecting a current supplied to the inverter 2 from a commercial power source, a voltage detector V detecting a voltage supplied to the inverter 2 from the commercial power source, and a second current detector detecting a current output from the inverter 2 to the resonant circuit 4. In an embodiment, the first current detector may include a first current sensor I1 measuring a current supplied to the inverter 2 from the commercial power source and a current-to-voltage conversion circuit generating a voltage signal corresponding to the measured current. In an embodiment, the second current detector may include a second current sensor I2 measuring a current output from the inverter 2 to the resonant circuit 4 and a current-to-voltage conversion circuit generating a voltage signal corresponding to the measured current.

However, the configuration of the induction heating device 100 is not limited thereto, and the induction heating device 100 may further include, for example, a display for displaying an operating state of the induction heating device 100, an alarm output unit for notifying a user that an object to be heated is misaligned above the heating coil 1, etc.

In an embodiment, the heating coil 1 may be installed below a top plate (not shown) on which a cooking pot or the like is placed and may inductively heat the cooking pot with the top plate disposed therebetween. In the example of FIG. 2, one heating coil 1 is installed, but the number of heating coils 1 is not limited thereto, and two or more heating coils 1 may be installed.

In an embodiment, the inverter 2 may be installed in correspondence to each heating coil 1, and in detail, may be composed of an inverter circuit 21 that supplies a high-frequency current to the heating coil 1, and a driving circuit 22 that drives the inverter circuit 21.

In an embodiment, the heating coil 1 may inductively heat the object to be heated when an AC flows therethrough. When the AC flows through the heating coil 1, a magnetic field that varies with time is induced inside the heating coil 1. The magnetic field generated by the heating coil 1 passes through a bottom surface of the object to be heated. When the time-varying magnetic field passes through an IH metal (e.g., iron, nickel steel, or various types of alloys) included in the bottom surface of the object to be heated, a current circulating around the magnetic field is generated in the IH metal. The circulating current is called an eddy current, and a phenomenon in which current is induced by the time-varying magnetic field is referred to as electromagnetic induction. Heat is generated due to the eddy current and resistance of the IH metal in the bottom surface of the object to be heated.

In an embodiment, the inverter circuit 21 may convert a direct current (DC) voltage to an AC voltage by turning on or off a plurality of switching devices SW and supply the AC voltage to the heating coil 1, and for example, may be configured in a half-bridge manner by using the plurality of switching devices SW. However, a specific configuration of the inverter circuit 21 may be appropriately changed, for example, to a full-bridge configuration.

In an embodiment, the driving circuit 22 may operate the switching devices SW constituting the inverter circuit 21, and turn the switching devices SW on or off based on an inverter control signal from the control device 3 as described below.

In an embodiment, the control device 3 may control the inverter 2 to heat the object to be heated with a desired heating power.

In an embodiment, as shown in FIG. 2, the control device 3 may include a manipulation unit 31 operated by the user, and a control unit 32 that receives an output from the manipulation unit 31 to control the inverter 2.

In an embodiment, the manipulation unit 31, as a controller operated by the user, may include a power reference provider 311 that outputs, to the control unit 32, power (i.e., output power) corresponding to a heating power of the heating coil 1 set by the user, as target power.

In an embodiment, the control unit 32 may include a power calculator 321 that calculates real power, which is actual power (i.e., actual output), based on a detection current and a detection voltage respectively detected by the first current detector (I1 and the current-to-voltage conversion circuit) and the voltage detector V, and the inverter controller 322 that controls the inverter 2 so that the actual power is close to the target power (i.e., the target output).

In an embodiment, the inverter controller 322 may control a driving frequency, which is a frequency of the power supplied to the heating coil 1 from the inverter 2. That is, the inverter controller 322 may output an inverter control signal indicating the driving frequency to the inverter 2.

In an embodiment, the inverter controller 322 may control an operation of turning on or off the plurality of switching devices SW included in the inverter 2. In other words, the inverter controller 322 may output a signal for turning on or off a switching device SW as an inverter control signal.

In an embodiment, the inverter controller 322 may control an on/off duty ratio of the switching device SW. In other words, the inverter controller 322 may operate in a first control mode in which an actual output is brought close to a target output by changing a driving frequency, and a second control mode in which the actual output is brought close to the target output by changing a duty ratio of the switching device SW.

The first control mode is a control mode in which the driving frequency is changed while turning on or off the switching device SW at a fixed duty ratio, as shown in an upper part of FIG. 3.

In an embodiment, the first control mode is pulse frequency modulation (PFM) control with an on-duty ratio fixed at 50 %. However, the fixed duty ratio is not limited to 50 %, and may be appropriately changed as long as a high-side duty ratio and a low-side duty ratio have an interpolation relationship therebetween, e.g., by setting the high-side duty ratio to 60 % and the low-side duty ratio to 40 %. In addition, a specific modulation method is not limited to PFM, and may be, for example, pulse width modulation (PWM).

The second control mode is a control mode in which the switching device SW is turned on and off at a variable duty ratio while keeping the driving frequency fixed, as shown in a lower part of FIG. 3.

In an embodiment, the second control mode is a (asymmetric) control mode in which an on-duty ratio of a high-side switching device SW is different from an on-duty ratio of a low-side switching device SW. For example, the inverter controller 322 may reduce the on-duty ratio of the high-side switching device SW so that the actual power matches the target power. In another example, the inverter controller 322 may increase the on-duty ratio of the low-side switching device SW so that the actual power matches the target power.

Furthermore, in the second control mode, when the on-duty ratio of the high-side switching device SW is lower than, for example, 30 %, this may lead to a failure of the switching device SW. In addition, a lower limit of the on-duty ratio that may cause the switching device SW to fail is not limited to 30 % and may vary depending on a device configuration.

In the example of FIG. 3, the on-duty ratio of the high-side switching device SW may be changed to at least 30 % but less than 50 %, such that the on-duty ratio of the low-side switching device SW is 100 % minus the on-duty ratio of the high-side switching device SW.

In an embodiment, the inverter controller 322 may control the inverter 2 to adjust the actual power to match the target power while operating in the first control mode or the second control mode, according to a predetermined rule or based on a control signal from the manipulation unit 31. For example, the inverter controller 322 may control the inverter 2 to operate in the first control mode or the second control mode based on a material or size of the object to be heated, or target power. In another example, the inverter controller 322 may control the inverter 2 to operate in the second control mode in order to operate the plurality of heating coils 1 at the same driving frequency.

In an embodiment, as illustrated in FIG. 2, the control device 3 may further include a signal receiver 323, the phase measuring unit 324, the determination unit 325, and a threshold calculator 326.

In an embodiment, the signal receiver 323 may obtain a detection signal output by the second current detector (I2 and the current-to-voltage conversion circuit) when the second current detector (I2 and the current-to-voltage conversion circuit) detects a current output to the heating coil 1 from the inverter 2.

This detection signal indicates a magnitude of the detected current, and in an embodiment, the signal receiver 323 may sequentially receive, as a detection signal, a signal obtained by converting the magnitude of the current detected by the second current detector (I2 and the current-to-voltage conversion circuit) into a voltage.

In an embodiment, the phase measuring unit 324 may measure, as a phase, a delay in an input time point at which a detection signal corresponding to an inverter control signal is obtained by the signal receiver 323 relative to an output time point at which the inverter control signal is output from the inverter controller 322.

In addition, the detection signal corresponding to the inverter control signal referred to herein is a detection signal that is output by operating the switching device SW according to the inverter control signal to output a current from the inverter 2, and detecting the current in the second current detector (I2 and the current-to-voltage conversion circuit).

More specifically, the phase measuring unit 324 may monitor an on/off signal for turning on or off the switching device SW as an inverter control signal output to the inverter 2 from the inverter controller 322, and obtain, for example, a time point when the on signal is output as the output time point described above.

In an embodiment, the phase measuring unit 324 may monitor magnitudes of a current represented by detection signals sequentially input to the signal receiver 323, and obtain a time point at which the current passes through a predetermined current value, such as a zero crossing point (a zero point), as the input time point described above.

In an embodiment, as illustrated in FIG. 4, the phase measuring unit 324 may compare an output time point when the on signal is output with an input time point when current corresponding to the on signal passes through, for example, a zero crossing point, and measure a ratio of a time difference or time shift between the output time point and the input time point as a phase.

A phase measured when the object to be heated is placed properly above the heating coil 1 is different from a phase measured when the object to be heated is misaligned above the heating oil 1. This is because electrical properties such as the reactance of the resonant circuit 4 change depending on the presence or absence of the object to be heated.

In an embodiment, the determination unit 325 may determine whether the object to be heated is misaligned above the heating coil 1 by comparing a phase measured by the phase measurement unit 324, with a threshold.

In an embodiment, the threshold is a phase in a state where the object to be heated is misaligned above the heating coil 1 (hereinafter referred to as a reference phase), or a phase calculated based on this reference phase.

In an embodiment, as illustrated in FIG. 5, the threshold may be set to a value obtained by subtracting a predetermined offset value from the reference phase, and the determination unit 325 may determine that the object to be heated is misaligned above the heating coil 1 when the measured phase exceeds the threshold. However, the method of setting the threshold is not limited thereto, and for example, the threshold may be set to a value obtained by multiplying the reference phase by a predetermined value or dividing the reference phase by a predetermined value.

In an embodiment, the reference phase may be theoretically calculated from a resistance value, a reactance value, a capacitance value, a driving frequency, and/or a duty ratio of the resonant circuit 4. In other words, the reference phase may be calculated using a phase calculation equation that includes as parameters the resistance value, reactance value, capacitance value, driving frequency, and/or duty ratio of the resonant circuit 4.

Therefore, the reference phase may change while controlling the driving frequency and duty ratio, and the threshold determined based on the reference phase may also change while controlling the driving frequency and duty ratio.

Thus, in an embodiment, the threshold calculator 326 may be configured to vary a threshold according to an output of an inverter control signal by calculating the threshold based on the inverter control signal.

That is, the threshold calculator 326 may calculate a reference phase, which is a theoretical value for a case where the object to be heated is misaligned above the heating coil 1 when placed above the heating coil 1, and calculate the threshold based on the reference phase.

More specifically, as described above, the inverter controller 322 outputs an inverter control signal representing a driving frequency and outputs an on/off signal of the switching device SW as the inverter control signal, and thus, the threshold calculator 326 may calculate a reference phase by using a phase calculation equation that includes the driving frequency and the duty ratio of the on/off signal as parameters.

In an embodiment, Equation (1) below may be used as a phase calculation equation.

$$DCP[\%] = k \times Arctan((\omega L_{coil} - 1/Cap)/R_{coil}) \times Duty \cdots \text{Equation (1)}$$

Here, DCP is the value of a calculated phase, k is a predetermined coefficient, $\omega$ is $2\pi \times F$, F is a driving frequency, Duty is a duty ratio of the switching device SW, $R_{coil}$ is a resistance value of the resonant circuit 4, $L_{coil}$ is a reactance value of the resonant circuit 4, and Cap is capacitance value of the resonant circuit 4.

Although the reference phase may be calculated by using Equation (1) as described above, in an embodiment, the threshold calculator 326 may use the following Equation (2) as the phase calculation equation, where the value of the phase obtained from Equation (1) is used as a theoretical phase value, with several additional factors added to the theoretical phase value. However, the phase calculation equation is not limited to Equation (1) or Equation (2) and may be

modified appropriately.

$$DCP[\%]=\text{Theoretical phase value}[\%]-\text{First delay}[\%]+\text{Second delay}[\%]+\text{Third delay}[\%]\cdots \text{Equation (2)} \qquad \text{Equation (2)}$$

Here, the first delay included in the phase calculation equation (2) is a delay in an input time point relative to an output time point, which occurs due to the dead time of the inverter 2. In addition, the dead time is the time during which both the high-side switching device SW and the low-side switching device SW are turned off, and is also referred to as interlock delay time.

In an embodiment, the threshold calculator 326 may calculate the first delay based on the dead time and the driving frequency, and in detail, it may calculate a ratio of the dead time to the reciprocal of the driving frequency as the first delay.

In an embodiment, the induction heating device 100 may further include a snubber circuit 5 connected to the inverter 2, as illustrated in FIG. 2, and the second delay included in the phase calculation equation (2) is a delay in an input time point relative to an output time point, which occurs due to the snubber circuit 5.

In an embodiment, the threshold calculator 326 may calculate the second delay by using the capacitance value of the snubber circuit 5, and in this case, the second delay may also be calculated by using a peak value of an AC voltage input to the resonant circuit 4, in other words, the peak value of the AC voltage output from the inverter 2.

Furthermore, the third delay included in the phase calculation equation (2) is a delay in an input time point relative to an output time point, which occurs due to hardware constituting the inverter 2, the control device 3, the first current detector (I1 and the current-to-voltage conversion circuit), the second current detector (I2 and the current-to-voltage conversion circuit), and the voltage detector V.

The third delay is caused due to, for example, a microcomputer, a driver integrated circuit (IC), circuitry, etc. constituting the control device, and for example, may be experimentally requested in advance, or roughly estimated from a circuit configuration of the control device.

A reference phase calculated by using the phase calculation equation (2) described above may vary depending on a driving frequency and a duty ratio, as illustrated in FIG. 6, and a threshold calculated by the threshold calculator 326 based on the reference phase also may vary depending on the driving frequency and duty ratio.

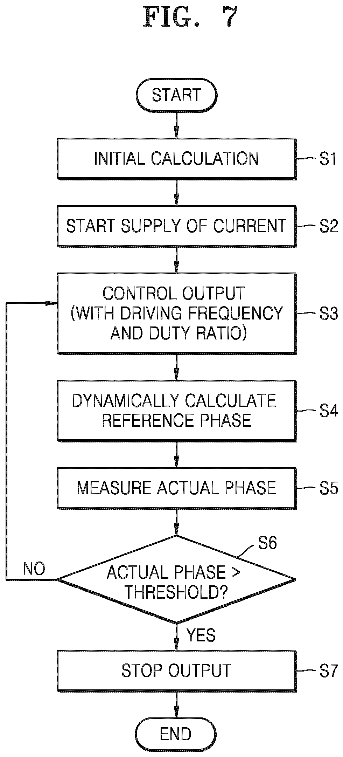

Next, operations of the control device 3 are described with reference to a flowchart of FIG. 7.

First, the control device 3 calculates, in advance, through initial calculation, values (hereinafter also referred to as fixed values) of parameters determined by, for example, design values of a device constituting the resonant circuit 4 from among parameters included in a phase calculation equation, and store the fixed values, for example, in an internal memory (S1).

These fixed values are the values of parameters that do not change during the control of output (heating power) by the control device 3, and may include, for example, a resistance value, a reactance value, and a capacitance value of the resonant circuit 4.

Thereafter, when the user operates the manipulation unit 31 to heat an object to be heated with desired power, supply of a current from the inverter 2 to the heating coil 1 may be started (S2).

Subsequently, the inverter controller 322 may control, in the first control mode or the second control mode, a driving frequency of the heating coil 1 and a duty ratio of the switching device SW so that an actual output matches a target output (S3).

Next, the threshold calculator 326 may calculate a reference phase by using a phase calculating equation, and dynamically change a threshold by using the reference phase (S4). In this case, the threshold calculator 326 may obtain a driving frequency and a duty ratio based on an inverter control signal output from the inverter controller 322, and use fixed values stored in the internal memory described above as values of the other parameters, thereby improving the speed of calculation of the reference phase.

Next, the phase measuring unit 324 may measure, as a phase, a delay in an input time point when a detection signal corresponding to the inverter control signal is input to the signal receiver 323 relative to an output time point when the inverter control signal is output from the inverter controller 322 (S5).

Then, the determination unit 325 may determine whether the object to be heated is misaligned above the heating coil 1 by comparing a measured actual phase with a threshold that changes according to the output time point (S6). For example, when the actual phase is less than or equal to the threshold, the determination unit 325 may determine that the object to be heated is placed properly above the heating coil 1, and when the actual phase is greater than the threshold, determine that the object to be heated is misaligned above the heating coil 1.

When it is determined in S6 that the object to be heated is placed properly above the heating coil 1, the process returns to S3 and operations from S3 to S6 are repeated.

On the other hand, when it is determined in S6 that the object to be heated is misaligned above the heating coil 1, the inverter controller 322 may output a stop signal to stop an output of the induction heating device 100 (S7).

Alternatively, when it is determined in S6 that the object to be heated is misaligned above the heating coil 1, the control unit 32 may output an alarm signal to notify the user that the object to be heated is misaligned above the heating coil 1 and then control the alarm output unit to sound an alarm.

In the induction heating device 100 configured as described above, the determination unit 325 determines whether the object to be heated is misaligned above the coil by comparing an actual phase measured by the phase measurement unit 324 with a threshold, thereby eliminating the need for a dedicated sensor for this determination.

Furthermore, because the threshold calculator 326 changes a threshold according to the timing of output of a control signal by calculating the threshold based on the control signal, the threshold is a dynamic value that changes depending on a situation in which the induction heating device 100 is used, such as a size or material of the object to be heated or a heating situation.

In this way, it is possible to detect a misalignment of the object to be heated over the heating coil 1 in all usage situations without installing dedicated components such as a sensor and the like.

In addition, because the threshold calculator 326 calculates a reference phase by using a phase calculation equation that includes a driving frequency represented by the control signal and a duty ratio of an on/off signal as parameters, it is possible to detect a misalignment of the object to be heated over the heating coil 1 in all usage situations even in a configuration in which the output is controlled by changing not only the driving frequency but also the duty ratio, in other words, in a configuration with many parameters used for control, thereby more significantly exerting the above-described effect, i.e., the effect of being able to detect the misalignment of the object to be heated over the heating coil 1 in all usage situations.

Furthermore, because the phase calculation equation includes a first delay caused by the dead time of the inverter 2 as a parameter, the reference phase may be calculated by adding the dead time, and thus the misalignment of the object to be heated may be determined more accurately.

Furthermore, because the phase calculation equation includes a second delay caused by the snubber circuit 5 as a parameter, the reference phase may be calculated by adding a delay caused by a capacitance value of the snubber circuit 5, and the misalignment of the object to be heated may be determined more accurately.

In addition, because the phase calculation equation includes a third delay caused by an electronic device constituting the control device 3 as a parameter, the reference phase may be calculated by adding a delay caused by the control device, such as a microcomputer, a driver IC, circuitry, etc., and the misalignment of the object to be heated may be determined more accurately.

In addition, the present disclosure is not limited to the above-described embodiment.

For example, although a time point when an on signal for controlling the switching device SW is output is described as an output time point, the output time point is not limited thereto, and may be, for example, a time point when an off signal is output.

In addition, although a time point when a current value represented by a detection signal passes through a zero crossing point is described as an input time point, the input time point is not limited thereto, and may be, for example, a time point when the current value becomes a maximum or minimum.

The phase calculation equation described above includes the first delay, the second delay, and the third delay, but it may include only one or two of these delays, or one or more delays other than these delays.

In addition, Equation (1) in the embodiment may be used as a phase calculation equation without adding the above-described delays.

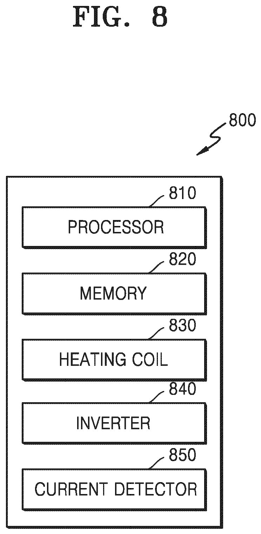

FIG. 8 is a block diagram of a configuration of an induction heating device 800 according to an embodiment of the present disclosure. The induction heating device 800 of FIG. 8 may correspond to the induction heating device 100 of FIG. 2, and is described below to the extent that a description thereof does not overlap with the description provided above.

In an embodiment, the induction heating device 800 may include at least one processor 810, a memory 820, a heating coil 830, an inverter 840, and a current detector 850. However, the components of the induction heating device 800 are not limited thereto, and may not include some of the components shown in FIG. 8, or may further include additional components (e.g., a power supply for receiving power to operate the induction heating device 800 from an external power source, an alarm output unit for notifying a user that the object to be heated is misaligned above the heating coil, etc.) in addition to the components shown in FIG. 8. The heating coil 830, the inverter 840, and the current detector 850 illustrated in FIG. 8 may respectively correspond to the heating coil 1, the inverter 2, and the second current detector (I2 and the current-to-voltage conversion circuit) illustrated in FIG. 2.

In an embodiment, the at least one processor 810 may perform operations of the control device 3 by executing one or more instructions stored in the memory 820. For example, the at least one processor 810 may be a general-purpose processor, such as a central processing unit (CPU), an application processor (AP), a digital signal processor (DSP), a microcontroller unit (MCU), etc., a dedicated graphics processor, such as a graphics processing unit (GPU), a vision processing unit (VPU), or a dedicated artificial intelligence (AI) processor, such as a neural processing unit (NPU). For example, if one or more processors are dedicated AI processors, the dedicated AI processors may be designed with a hardware structure specialized for processing a specific AI model.

In an embodiment, the memory 820 stores one or more instructions executable by the processor 810. For example, the memory 820 may consist of a storage medium or a combination of storage media, such as read-only memory (ROM), random access memory (RAM), a hard disk, a compact disc ROM (CD-ROM), and a digital versatile disc (DVD). The memory 820 may not exist separately, but may be configured to be included in the processor 810. The memory 820 may consist of volatile memory, non-volatile memory, or a combination of volatile memory and non-volatile memory.

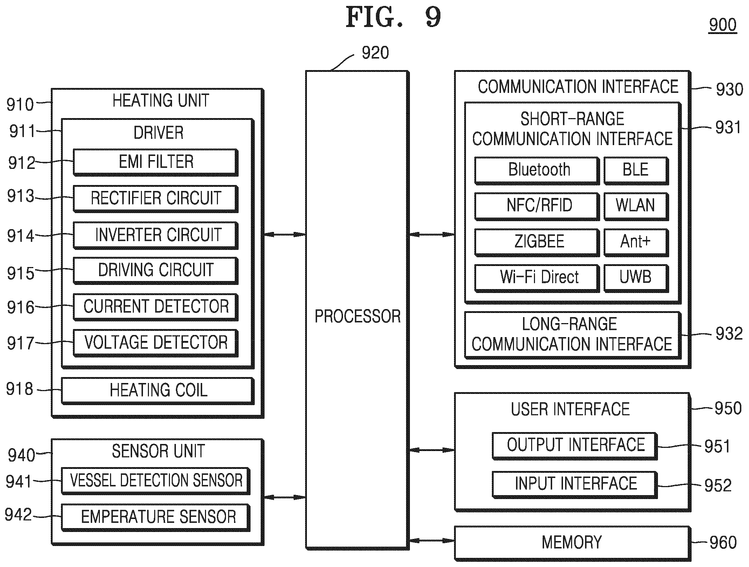

FIG. 9 is a detailed block diagram illustrating functions of an induction heating device, according to an embodiment of the present disclosure. An induction heating device 900 of FIG. 9 may correspond to the induction heating device 100 of FIGS. 1 and 2 or the induction heating device 800 of FIG. 8.

As shown in FIG. 9, according to an embodiment of the present disclosure, the induction heating device 900 may include a heating unit 910, a processor 920, a communication interface 930, a sensor unit 940, a user interface 950, and a memory 960. However, all of the components shown in FIG. 9 are not essential components. The induction heating device 900 may be implemented with more components than those shown in FIG. 9, or may be implemented with fewer components than those.

Hereinafter, the above components are described in detail.

The heating unit 910 may include a driver 911 and a heating coil 918, but is not limited thereto. The heating unit 910 may receive power from an external source and supply a current to the heating coil 918 according to a driving control signal from the processor 920. The heating coil may also be referred to as an induction coil or electromagnetic induction coil. The heating unit 910 may include an electromagnetic interference (EMI) filter 912, a rectifier circuit 913, an inverter circuit 914, a driving circuit 915, a current detector 917, and a voltage detector 917, but is not limited thereto.

The EMI filter 912 may block high-frequency noise included in AC power supplied from an external source while allowing an AC voltage and an AC having a predetermined frequency (e.g., 50 hertz (Hz) or 60 Hz) to pass therethrough. A fuse and a relay may be provided between the EMI filter 912 and the external source to block overcurrent. The AC power from which high-frequency noise is blocked by the EMI filter 912 is supplied to the rectifier 913.

The rectifier circuit 913 may convert AC power into DC power. For example, the rectifier circuit 913 may convert an AC voltage whose magnitude and polarity (positive or negative voltage) change over time into a DC voltage whose magnitude and polarity remain constant over time, and convert an AC whose magnitude and direction (positive or negative current) change over time into a DC having a constant magnitude. The rectifier circuit 913 may include a bridge diode. For example, the rectifier circuit 913 may include four diodes. The bridge diode may convert an AC voltage whose polarity changes over time into a positive voltage having a constant polarity, and convert an AC whose direction changes over time into a positive current that flows in a constant direction. The rectifier circuit 913 may include a DC link capacitor. The DC link capacitor may convert a positive voltage whose magnitude changes over time into a DC voltage having a constant magnitude.

The inverter circuit 914 may include a switching circuit that supplies or blocks a driving current to the heating coil 918 and a resonant circuit (e.g., 4 of FIG. 2) that causes resonance with the heating coil 918. The switching circuit may include a first switch and a second switch. The first switch and the second switch may be connected in series between a plus line and a minus line from the rectifier circuit 913. The first switch and the second switch may be each turned on or off according to a driving control signal from the processor 920.

The inverter circuit 914 may control a current being supplied to the heating coil 918. For example, a magnitude and a direction of the current flowing through the heating coil 918 may change according to turning on/off of the first switch and the second switch included in the inverter circuit 914. In this case, an AC may be supplied to the heating coil 918. The AC having a sinusoidal waveform is supplied to the heating coil 918 according to switching operations of the first switch and the second switch. In addition, the longer the switching period of the first switch and the second switch (e.g., the lower the switching frequency of the first switch and the second switch), the larger the current supplied to the heating coil 918, and the greater the intensity of heat emitted by the heating coil 918.

When the induction heating device 900 includes a plurality of heating coils 918, the driver 911 may include a distribution circuit (not shown). The distribution circuit may include a plurality of switches that allow currents supplied to the plurality of heating coils to pass or block the currents, and the plurality of switches may be turned on or off according to a distribution control signal from the processor 920.

The current detector 916 may include a current sensor that measures the current output from the inverter circuit 914. The current sensor may transmit an electrical signal corresponding to the measured current value to the processor 920.

The processor 920 may determine a switching frequency (turn-on/turn-off frequency) of the switching circuit included in the inverter circuit 914, based on an output intensity (a power level) of the induction heating device 900. The processor 920 may generate a driving control signal for turning on/off the switching circuit according to the determined switching frequency.

The heating coil 918 may generate heat for heating the object 200 to be heated. For example, when a current is supplied to the heating coil 918, electrical resistance heat may be generated in the heating coil 918. The object 200 to be heated and the contents within the object 200 to be heated may be heated by the electrical resistance heat. The electrical resistance heat is the heat generated in a resistor when a current flows through the resistor, and is also referred to as Joule heat.

The processor 920 controls all operations of the induction heating device 900. The processor 920 may control the heating unit 910, the communication interface 930, the sensor unit 940, the user interface 950, and the memory 960 by executing programs stored in the memory 960.

According to an embodiment of the present disclosure, the induction heating device 900 may be equipped with an AI processor. The AI processor may be manufactured in the form of a dedicated hardware chip for AI, or may be manufactured as part of an existing general-purpose processor (e.g., a CPU or an AP) or a dedicated graphics processor (e.g., a GPU) and mounted on the induction heating device 900.

The communication interface 930 may include one or more components that enable communication between the induction heating device 900 and an external device (e.g., a server device). For example, the communication interface 930 may include a short-range communication interface 931 and a long-range communication interface 932. The short-range communication interface 931 may include, but is not limited to, a Bluetooth communication interface, a BLE communication interface, an NFC interface, a wireless local area network (WLAN) (or Wi-Fi) communication interface, a ZigBee communication interface, an Infrared Data Association (IrDA) communication interface, a Wi-Fi Direct (WFD) communication interface, an ultra-wideband (UWB) communication interface, an Ant+ communication interface, etc. The long-range communication interface 932 may include the Internet, a computer network (e.g., a LAN or a wide area network (WAN)), and a mobile communication interface. The mobile communication interface transmits or receives a wireless signal to or from at least one of a base station, an external terminal, or a server on a mobile communication network. In this case, the wireless signal may be a voice call signal, a video call signal, or data in any one of various formats according to transmission and reception of a text/multimedia message. The mobile communication interface may include, but is not limited to, a 3rd generation (3G) module, a 4th generation (4G) module, a long-term evolution (LTE) module, a 5th generation (5G) module, a 6th generation (6G) module, a narrowband Internet of Things (NB-IoT) module, an LTE machine (LTE-M) module, etc.

The sensor unit 940 may include a vessel detection sensor 941 and a temperature sensor 942, but is not limited thereto.

The vessel detection sensor 941 may be a sensor that detects whether the object 200 to be heated is placed on a top plate. For example, the vessel detection sensor 941 may be implemented as a current sensor, but is not limited thereto. The vessel detection sensor 941 may be implemented as at least one of a proximity sensor, a touch sensor, a weight sensor, a temperature sensor, an illuminance sensor, and a magnetic sensor.

The temperature sensor 941 may detect a temperature of the object 200 to be heated, which is placed on the top plate, or a temperature of the top plate. The object 200 to be heated is inductively heated by the heating coil 918 and may be overheated depending on its material. Thus, the induction heating device 900 may sense the temperature of the object 200 to be heated placed on the top plate or the temperature of the top plate, and stop the heating coil 918 from operating when the heating coil 918 is overheated. The temperature sensor 942 may be installed in a vicinity of the heating coil 918. For example, the temperature sensor 2420 may be located exactly at a center of the heating coil 918.

According to an embodiment, the temperature sensor 942 may include a thermistor whose electrical resistance changes depending on temperature. For example, the temperature sensor 942 may be a negative temperature coefficient (NTC) temperature sensor, but is not limited thereto. The temperature sensor may be a positive temperature coefficient (PTC) temperature sensor.

The user interface 950 may include an output interface 951 and an input interface 952. The output interface 951 is for outputting an audio signal or a video signal, and may include a display, an audio output interface, etc.

When the display and a touch pad form a layer structure to construct a touch screen, the display may serve as an input interface as well as an output interface. The display may include at least one of a liquid crystal display (LCD), a thin-film transistor LCD (TFT-LCD), a light-emitting diode (LED) display, an organic LED (OLED) display, a flexible display, a three-dimensional (3D) display, and an electrophoretic display. Furthermore, the induction heating device 900 may include two or more displays according to its implemented configuration.

The audio output interface may output audio data received via the communication interface 930 or stored in the memory 960. The audio output interface may also output sound signals related to functions performed by the induction heating device 900. The audio output interface may include a speaker, a buzzer, and the like.

In an embodiment, the output interface 951 may display information about the object 200 to be heated. For example, the output interface 951 may output a message indicating that the object 200 to be heated is misaligned from a cooking zone.

The input interface 952 is for receiving an input from the user. The input interface 952 may be at least one of a keypad, a dome switch, a touch pad (a capacitive overlay type, a resistive overlay type, an infrared beam type, a surface acoustic wave type, an integral strain gauge type, a piezoelectric type, etc.), a jog wheel, or a jog switch, but is not limited thereto.

The input interface 952 may include a speech recognition module. For example, the induction heating device 900 may receive a speech signal, which is an analog signal, via a microphone, and convert a speech portion into computer-readable text by using an automatic speech recognition (ASR) model. The induction heating device 900 may obtain an intent in a user's utterance by interpreting the text using a natural language understanding (NLU) model. Here, the ASR model or NLU model may be an AI model. An AI model may be processed by a dedicated AI processor designed with a hardware structure specialized for processing an AI model. The AI model may be created via a training process. In this case, the creation via the training process means that predefined operation rules or AI model set to perform desired characteristics (or purpose) are created by training a base AI model based on a large number of training data via a learning algorithm. An AI model may consist of a plurality of neural network layers. Each of the plurality of neural network layers has a plurality of weight values and may perform neural network computations via calculations between a result of computations in a previous layer and the plurality of weight values.

Linguistic understanding is a technology for recognizing and applying/processing human language/characters and may include natural language processing, machine translation, a dialog system, question answering, speech recognition/synthesis, etc.

The memory 960 may store programs necessary for processing or control performed by the processor 920 and input/output data (e.g., inverter driving frequency, etc.). The memory 960 may also store an AI model.

The memory 960 may include at least one type of storage medium from among a flash memory-type memory, a hard disk-type memory, a multimedia card micro-type memory, a card-type memory (e.g., a Secure Digital (SD) card or an eXtreme Digital (XD) memory), RAM, static RAM (SRAM), ROM, electrically erasable programmable ROM (EEPROM), PROM, a magnetic memory, a magnetic disc, and an optical disc. In addition, the induction heating device 900 may operate a web storage or cloud server that performs a storage function on the Internet.

In addition, the present disclosure is not limited to a form described herein, and it will be apparent to those of ordinary skill in the art that various modifications are possible without departing from the spirit thereof.

An induction heating device according to an embodiment of the present disclosure may include at least one processor 810, a heating coil 1 or 830 configured to inductively heat an object to be heated when an AC flows therethrough, an inverter 2 or 840 configured to convert a DC voltage into an AC voltage by turning on or off a plurality of switching devices therein and supply the AC voltage to the heating coil 1 or 830, and a current detector 850 configured to detect an AC flowing from the inverter 2 or 840 to the heating coil 1 or 830 and output a detection signal corresponding to the detected AC.

In an embodiment, the at least one processor 810 may be configured to output an inverter control signal for controlling the inverter 2 or 840 to the inverter 2 or 840.

In an embodiment, the at least one processor 810 may be configured to obtain the detection signal corresponding to the detected AC.

In an embodiment, the at least one processor 810 may be configured to measure, as an actual phase, a delay in an input time point at which the detection signal corresponding to the inverter control signal is obtained relative to an output time point at which the inverter control signal is output.

In an embodiment, the at least one processor 810 may be configured to calculate, based on the inverter control signal, a reference phase which is a delay in the input time point relative to the output time point in a state where the object to be heated is misaligned above the heating coil 1 or 830.

In an embodiment, the at least one processor 810 may calculate a threshold by subtracting a predetermined offset from the reference phase.

In an embodiment, the at least one processor 810 may be configured to determine whether the object to be heated is misaligned above the heating coil 1 or 830 by comparing the actual phase with the threshold.

In an embodiment, the inverter control signal for controlling the inverter 2 or 840 may include a driving frequency of the heating coil 1 or 830 and on/off signals for controlling the plurality of switching devices included in the inverter 2 or 840.

In an embodiment, calculating the reference phase may include calculating the reference phase based on the driving frequency and a duty ratio of the on/off signal.

In an embodiment, the plurality of switching devices may include a high-side switching device and a low-side switching device.

In an embodiment, the calculating of the reference phase may include calculating the reference phase further based on a first delay that is a delay in the input time point relative to the output time point, which occurs due to a dead time of the inverter 2 or 840.

In an embodiment, the dead time may be a time when both the high-side switching device and the low-side switching device are turned off.

In an embodiment, the first delay may be calculated based on the dead time and the driving frequency.

In an embodiment, the induction heating device may further include a snubber circuit connected to the inverter 2 or 840, and the calculating of the reference phase may include calculating the reference phase further based on a second delay that is a delay in the input time point relative to the output time point, which occurs due to the snubber circuit.

In an embodiment, the second delay may be calculated based on a peak value of the AC voltage supplied to the heating coil from the inverter 2 or 840.

In an embodiment, the calculating of the reference phase may include calculating the reference phase further based on a third delay that is a delay in the input time point relative to the output time point, which occurs due to hardware constituting the at least one processor 810, the inverter 2 or 840, and the current detector 850 .

In an embodiment, the at least one processor 810 may be configured to determine that the object to be heated is misaligned above the heating coil 1 or 830 when the actual phase is greater than or equal to the threshold, and determine that the object to be heated is not misaligned above the heating coil 1 or 830 when the actual phase is less than the threshold.

In an embodiment, the threshold may vary depending on a time point at which the inverter control signal is output.

In an embodiment, the outputting of the inverter control signal for controlling the inverter 2 or 840 to the inverter 2 or 840 may include, according to a predetermined rule, outputting, in a first control mode, to the inverter 2 or 840, a control signal for changing the driving frequency of the heating coil 1 or 830 while turning on or off the plurality of switching devices at a fixed duty ratio, or outputting, in a second control mode, to the inverter 2 or 840, a control signal for turning on or off the plurality of switching devices at a variable duty ratio while keeping the driving frequency fixed.

In an embodiment, calculating the reference phase may include calculating the reference phase by using

$$DCP[\%]=k \times Arctan((\omega Lcoil-1/Cap)/Rcoil) \times Duty$$

where DCP is the reference phase, k is a predetermined coefficient, $\omega$ is $2\pi \times F$, F is the driving frequency, Duty is a duty ratio of a switching device, Rcoil is a resistance value of a resonant circuit including the heating coil 1 or 830, Lcoil is a reactance value of the resonant circuit including the heating coil 1 or 830, and Cap is a capacitance value of the resonant circuit including the heating coil 1 or 830.

In an embodiment, calculating the reference phase may include calculating the reference phase by using

$$DCP[\%]=k \times Arctan((\omega Lcoil-1/Cap)/Rcoil) \times Duty - First\ delay[\%] + Second\ delay[\%] + Third\ delay[\%]$$

where DCP is the reference phase, k is a predetermined coefficient, $\omega$ is $2\pi \times F$, F is the driving frequency, Duty is a duty ratio of a switching device, Rcoil is a resistance value of a resonant circuit including the heating coil 1 or 830, Lcoil is a reactance value of the resonant circuit including the heating coil 1 or 830, Cap is a capacitance value of the resonant circuit including the heating coil 1 or 830, the first delay is a delay in the input time point relative to the output time point, which occurs due to a dead time of the inverter 2 or 840, the second delay is a delay in the input time point relative to the output time point, which occurs due to a snubber circuit, and the third delay is a delay in the input time point relative to the output time point, which occurs due to hardware constituting the at least one processor 810, the inverter 2 or 840, and the current detector 850.

In an embodiment, in response to determining that the object to be heated is misaligned above the heating coil 1 or 830, the at least one processor 810 may be configured to perform at least one of outputting a stop signal for stopping the inverter 2 or 840 to the inverter 2 or 840, or outputting, to an alarm output unit, an alarm signal for notifying a user that the object to be heated is misaligned above the heating coil 1 or 830.

According to an embodiment of the present disclosure, a method, performed by an induction heating device, of detecting a misalignment of an object to be heated above a heating coil 1 or 830, the induction heating device including the heating coil 1 or 830 for inductively heating the object to be heated when an AC flows therethrough, and an inverter 2 or 840 for converting a DC voltage into an AC voltage by turning on or off a plurality of switching devices therein and supplying the AC voltage to the heating coil 1 or 830, may include outputting, to the inverter, an inverter control signal for controlling the inverter.

In an embodiment, the method may include obtaining a detection signal corresponding to the AC flowing from the inverter to the heating coil.

In an embodiment, the method may include measuring, as an actual phase, a delay in an input time point at which the detection signal corresponding to the inverter control signal is obtained relative to an output time point at which the inverter control signal is output.

In an embodiment, the method may include calculating, based on the inverter control signal, a reference phase which is a delay in the input time point relative to the output time point in a state where the object to be heated is misaligned above the heating coil.

In an embodiment, the method may include calculating a threshold by subtracting a predetermined offset from the reference phase.

In an embodiment, the method may include determining whether the object to be heated is misaligned above the heating coil by comparing the actual phase with the threshold.

In an embodiment, the plurality of switching devices may include a high-side switching device and a low-side switching device.

In an embodiment, the calculating of the reference phase may include calculating the reference phase further based on a first delay that is a delay in the input time point relative to the output time point, which occurs due to a dead time of the inverter 2 or 840.

In an embodiment, the dead time may be a time when both the high-side switching device and the low-side switching device are turned off.

In an embodiment, the first delay may be calculated based on the dead time and the driving frequency.

In an embodiment, the induction heating device may include a snubber circuit connected to the inverter, and the calculating of the reference phase may include calculating the reference phase further based on a second delay that is a delay in the input time point relative to the output time point, which occurs due to the snubber circuit.

In an embodiment, the second delay may be calculated based on a peak value of the AC voltage supplied to the heating coil from the inverter 2 or 840.

In an embodiment, the calculating of the reference phase may include calculating the reference phase further based on a third delay that is a delay in the input time point relative to the output time point, which occurs due to hardware included in the induction heating device.

In an embodiment, the method may include determining that the object to be heated is misaligned above the heating coil 1 or 830 when the actual phase is greater than or equal to the threshold, and determining that the object to be heated is not misaligned above the heating coil 1 or 830 when the actual phase is less than the threshold value.

In an embodiment, the threshold may vary depending on a time point at which the inverter control signal is output.

In an embodiment, the outputting of the inverter control signal for controlling the inverter to the inverter may include, according to a predetermined rule, outputting, in a first mode, to the inverter 2 or 840, a control signal for changing the driving frequency of the heating coil 1 or 830 while turning on or off the plurality of switching devices at a fixed duty ratio, or outputting, in a second control mode, to the inverter 2 or 840, a control signal for turning on or off the plurality of switching devices at a variable duty ratio while keeping the driving frequency fixed.

In an embodiment, the calculating of the reference phase may include calculating the reference phase by using

$$DCP[\%]=k \times Arctan((\omega Lcoil-1/Cap)/Rcoil) \times Duty$$

where DCP is the reference phase, k is a predetermined coefficient, $\omega$ is $2\pi \times F$, F is the driving frequency, Duty is a duty ratio of a switching device, Rcoil is a resistance value of a resonant circuit including the heating coil 1 or 830, Lcoil is a reactance value of the resonant circuit including the heating coil 1 or 830, and Cap is a capacitance value of the resonant circuit including the heating coil 1 or 830.

In an embodiment, the calculating of the reference phase may include calculating the reference phase by using

$$DCP[\%]=k \times Arctan((\omega Lcoil-1/Cap)/Rcoil) \times Duty - First\ delay[\%] + Second\ delay[\%] + Third\ delay[\%]$$

where DCP is the reference phase, k is a predetermined coefficient, $\omega$ is $2\pi \times F$, F is the driving frequency, Duty is a duty ratio of a switching device, Rcoil is a resistance value of a resonant circuit including the heating coil 1 or 830, Lcoil is a reactance value of the resonant circuit including the heating coil 1 or 830, Cap is a capacitance value of the resonant circuit including the heating coil 1 or 830, the first delay is a delay in the input time point relative to the output time point, which occurs due to a dead time of the inverter 2 or 840, the second delay is a delay in the input time point relative to the output time point, which occurs due to a snubber circuit, and the third delay is a delay in the input time point relative to the output time point, which occurs due to hardware included in the induction heating device.

In an embodiment, the method may include, in response to determining that the object to be heated is misaligned above the heating coil 1 or 830, performing at least one of outputting a stop signal for stopping the inverter 2 or 840 to the inverter 2 or 840, or outputting, to an alarm output unit, an alarm signal for notifying a user that the object to be heated is misaligned above the heating coil 1 or 830.

According to the induction heating device and method configured as described above, the induction heating device may determine whether an object to be heated is misaligned above a coil by comparing an actual phase with a threshold, thereby eliminating the need for a dedicated sensor for this determination.

Furthermore, because the induction heating device changes a threshold according to the timing of output of a control signal by calculating the threshold based on the control signal, the threshold becomes a dynamic value that changes depending on a situation in which the induction heating device is used, such as a size or material of the object to be heated or a heating situation.

Thus, a misalignment of the object to be heated above the heating coil may be detected in all usage situations without installing dedicated components such as sensors.

Even in a configuration where an output is controlled by changing not only a driving frequency but also a duty ratio, in other words, in a configuration where many parameters are used for control, the misalignment of the object to be heated may be detected in all usage situations.

**Claims**

1. An induction heating device comprising:

   at least one processor (810);
   a heating coil (1; 830) configured to inductively heat an object to be heated when an alternating current flows therethrough;
   an inverter (2; 840) configured to convert a direct current voltage into an alternating current voltage by turning on or off a plurality of switching devices therein and supply the alternating current voltage to the heating coil (1; 830); and
   a current detector (850) configured to detect an alternating current flowing from the inverter (2; 840) to the heating coil (1; 830) and output a detection signal corresponding to the detected alternating current,
   wherein the at least one processor (810) is configured to
   output, to the inverter (2; 840), an inverter control signal for controlling the inverter (2; 840),
   obtain the detection signal corresponding to the detected alternating current,
   measure, as an actual phase, a delay in an input time point at which the detection signal corresponding to the inverter control signal is obtained relative to an output time point at which the inverter control signal is output,
   calculate, based on the inverter control signal, a reference phase which is a delay in the input time point relative to the output time point in a state where the object to be heated is misaligned above the heating coil (1; 830),
   calculate a threshold by subtracting a predetermined offset from the reference phase, and
   determine whether the object to be heated is misaligned above the heating coil (1; 830) by comparing the actual phase with the threshold.

2. The induction heating device of claim 1, wherein

   the inverter control signal for controlling the inverter (2; 840) comprises a driving frequency of the heating coil (1; 830) and on/off signals for controlling the plurality of switching devices included in the inverter (2; 840), and
   the calculating of the reference phase comprises
   calculating the reference phase based on the driving frequency and a duty ratio of the on/off signals.

3. The induction heating device of claim 1 or 2, wherein

   the plurality of switching devices comprise a high-side switching device and a low-side switching device, and
   the calculating of the reference phase comprises
   calculating the reference phase further based on a first delay that is a delay in the input time point relative to the output time point, which occurs due to a dead time of the inverter (2; 840),
   wherein the dead time is a time when both the high-side switching device and the low-side switching device are turned off.

4. The induction heating device of claim 3, wherein the first delay is calculated based on the dead time and the driving frequency.

5. The induction heating device of any one of claims 1 to 4, further comprising

   a snubber circuit connected to the inverter (2; 840),
   wherein the calculating of the reference phase comprises
   calculating the reference phase further based on a second delay that is a delay in the input time point relative to the output time point, which occurs due to the snubber circuit.

6. The induction heating device of any one of claims 1 to 5, wherein the second delay is calculated based on a peak value of the alternating current voltage supplied to the heating coil from the inverter (2; 840).

7. The induction heating device of any one of claims 1 to 6, wherein the calculating of the reference phase comprises calculating the reference phase further based on a third delay that is a delay in the input time point relative to the output time point, which occurs due to hardware constituting the at least one processor (810), the inverter (2; 840), and the current detector (850).

8. The induction heating device of any one of claims 1 to 7, wherein

the at least one processor (810) is further configured to
determine that the object to be heated is misaligned above the heating coil (1; 830) when the actual phase is greater than or equal to the threshold, and
determine that the object to be heated is not misaligned above the heating coil (1; 830) when the actual phase is less than the threshold.

9. The induction heating device of any one of claims 1 to 8, wherein the threshold varies depending on a time point at which the inverter control signal is output.

10. The induction heating device of any one of claims 1 to 9, wherein

the outputting of the inverter control signal for controlling the inverter (2; 840) to the inverter (2; 840) comprises, according to a predetermined rule,
outputting, in a first control mode, to the inverter (2; 840), a control signal for changing the driving frequency of the heating coil (1; 830) while turning on or off the plurality of switching devices at a fixed duty ratio, or
outputting, in a second control mode, to the inverter (2; 840), a control signal for turning on or off the plurality of switching devices at a variable duty ratio while keeping the driving frequency fixed.

11. The induction heating device of any one of claims 1 to 10, wherein the calculating of the reference phase comprises calculating the reference phase by using $DCP[\%]=k\times Arctan((\omega Lcoil-1/Cap)/Rcoil)\times Duty$ where DCP is the reference phase, k is a predetermined coefficient, $\omega$ is $2\pi\times F$, F is the driving frequency, Duty is a duty ratio of a switching device, Rcoil is a resistance value of a resonant circuit including the heating coil (1; 830), Lcoil is a reactance value of the resonant circuit including the heating coil (1; 830), and Cap is a capacitance value of the resonant circuit including the heating coil (1; 830).

12. The induction heating device of any one of claims 1 to 11, wherein the calculating of the reference phase comprises calculating the reference phase by using $DCP[\%]=k\times Arctan((\omega Lcoil-1/Cap)/Rcoil)\times Duty$ - First delay[%] + Second delay[%] + Third delay[%] where DCP is the reference phase, k is a predetermined coefficient, $\omega$ is $2\pi\times F$, F is the driving frequency, Duty is a duty ratio of a switching device, Rcoil is a resistance value of a resonant circuit including the heating coil (1; 830), Lcoil is a reactance value of the resonant circuit including the heating coil (1; 830), Cap is a capacitance value of the resonant circuit including the heating coil (1; 830), the first delay is a delay in the input time point relative to the output time point, which occurs due to a dead time of the inverter (2; 840), the second delay is a delay in the input time point relative to the output time point, which occurs due to a snubber circuit, and the third delay is a delay in the input time point relative to the output time point, which occurs due to hardware constituting the at least one processor (810), the inverter (2; 840), and the current detector (850).

13. The induction heating device of any one of claims 1 to 12, wherein, in response to determining that the object to be heated is misaligned above the heating coil (1; 830),

the at least one processor (810) is further configured to perform at least one of outputting a stop signal for stopping the inverter (2; 840) to the inverter (2; 840), or
outputting, to an alarm output unit, an alarm signal for notifying a user that the object to be heated is misaligned above the heating coil (1; 830).

14. A method, performed by an induction heating device, of detecting a misalignment of an object to be heated above a heating coil (1; 830), the induction heating device including the heating coil (1; 830) for inductively heating the object to be heated when an alternating current flows therethrough, and an inverter (2; 840) for converting a direct current voltage into an alternating current voltage by turning on or off a plurality of switching devices therein and supplying the alternating current voltage to the heating coil (1; 830), the method comprising:

outputting, to the inverter, an inverter control signal for controlling the inverter;
obtaining a detection signal corresponding to the alternating current flowing from the inverter to the heating coil;
measuring, as an actual phase, a delay in an input time point at which the detection signal corresponding to the inverter control signal is obtained relative to an output time point at which the inverter control signal is output;

calculating, based on the inverter control signal, a reference phase which is a delay in the input time point relative to the output time point in a state where the object to be heated is misaligned above the heating coil; calculating a threshold by subtracting a predetermined offset from the reference phase; and determining whether the object to be heated is misaligned above the heating coil by comparing the actual phase with the threshold.

15. The method of claim 14, wherein

the inverter control signal for controlling the inverter (2; 840) comprises a driving frequency of the heating coil (1; 830) and on/off signals for controlling the plurality of switching devices included in the inverter (2; 840), and the calculating of the reference phase comprises calculating the reference phase based on the driving frequency and a duty ratio of the on/off signals.

# FIG. 1

# FIG. 2

# FIG. 3

PFM(PULSE FREQUENCY MODULATION)
PERFORM CONTROL BY MODULATING FREQUENCY
WITH ON-DUTY RATIO FIXED AT 50 %

HIGH SIDE

LOW SIDE

ASYM(ASYMMETRIC DUTY RATIO)
PERFORM CONTROL BY VARYING DUTY RATIO WHILE KEEPING FREQUENCY FIXED
HIGH-SIDE ON-DUTY: AT LEAST 30 % BUT LESS THAN 50 %
LOW-SIDE ON-DUTY: 100 % – HIGH-SIDE ON-DUTY

HIGH-SIDE ON
-DUTY

LOW-SIDE ON
-DUTY

# FIG. 4

# FIG. 5

PHASE

REFERENCE PHASE

ABSENCE OF OBJECT
TO BE HEATED — ACTUAL PHASE

THRESHOLD =
REFERENCE PHASE – OFFSET VALUE

PRESENCE OF OBJECT
TO BE HEATED — ACTUAL PHASE

EP 4 586 740 A1

# FIG. 6

# FIG. 7

```
          ( START )
              │
              ▼
┌──────────────────────────┐
│   INITIAL CALCULATION     │──── S1
└──────────────────────────┘
              │
              ▼
┌──────────────────────────┐
│  START SUPPLY OF CURRENT  │──── S2
└──────────────────────────┘
              │
              ▼
┌──────────────────────────┐
│     CONTROL OUTPUT        │
│  (WITH DRIVING FREQUENCY  │──── S3
│     AND DUTY RATIO)       │
└──────────────────────────┘
              │
              ▼
┌──────────────────────────┐
│  DYNAMICALLY CALCULATE    │──── S4
│     REFERENCE PHASE       │
└──────────────────────────┘
              │
              ▼
┌──────────────────────────┐
│   MEASURE ACTUAL PHASE    │──── S5
└──────────────────────────┘
              │
              ▼           S6
          ◇ ACTUAL PHASE >
      NO    THRESHOLD?
              │ YES
              ▼
┌──────────────────────────┐
│       STOP OUTPUT         │──── S7
└──────────────────────────┘
              │
              ▼
           ( END )
```

# FIG. 8

800

| 810 |
|---|
| PROCESSOR |

| 820 |
|---|
| MEMORY |

| 830 |
|---|
| HEATING COIL |

| 840 |
|---|
| INVERTER |

| 850 |
|---|
| CURRENT DETECTOR |

# FIG. 9

900

**920** PROCESSOR

**910** HEATING UNIT
**911** DRIVER
**912** EMI FILTER
**913** RECTIFIER CIRCUIT
**914** INVERTER CIRCUIT
**915** DRIVING CIRCUIT
**916** CURRENT DETECTOR
**917** VOLTAGE DETECTOR
**918** HEATING COIL

**940** SENSOR UNIT
**941** VESSEL DETECTION SENSOR
**942** EMPERATURE SENSOR

**930** COMMUNICATION INTERFACE
**931** SHORT-RANGE COMMUNICATION INTERFACE
Bluetooth | BLE
NFC/RFID | WLAN
ZIGBEE | Ant+
Wi-Fi Direct | UWB
**932** LONG-RANGE COMMUNICATION INTERFACE

**950** USER INTERFACE
**951** OUTPUT INTERFACE
**952** INPUT INTERFACE

**960** MEMORY

EP 4 586 740 A1

## INTERNATIONAL SEARCH REPORT

| International application No. |
| --- |
| **PCT/KR2023/018387** |

### A. CLASSIFICATION OF SUBJECT MATTER

**H05B 6/12**(2006.01)i; **H05B 6/06**(2006.01)i

According to International Patent Classification (IPC) or to both national classification and IPC

### B. FIELDS SEARCHED

Minimum documentation searched (classification system followed by classification symbols)

H05B 6/12(2006.01); H05B 6/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 가열코일(heating coil), 용기(vessel), 어긋남(misalign), 위상(phase), 문턱값 (threshold), 비교(compare), 오프셋(offset), 인버터(inverter), 검출부(detector)

### C. DOCUMENTS CONSIDERED TO BE RELEVANT

| Category* | Citation of document, with indication, where appropriate, of the relevant passages | Relevant to claim No. |
| --- | --- | --- |
| Y | WO 2014-090864 A1 (ARCELIK ANONIM SIRKETI et al.) 19 June 2014 (2014-06-19)<br>See paragraphs [0004] and [0035]; and claim 1. | 1,8-9,13-14 |
| A | | 2-7,10-12,15 |
| Y | KR 10-0273027 B1 (LG ELECTRONICS INC.) 01 December 2000 (2000-12-01)<br>See claim 1. | 1,8-9,13-14 |
| Y | JP 2010-262865 A (MITSUBISHI ELECTRIC CORP. et al.) 18 November 2010 (2010-11-18)<br>See claim 11. | 13 |
| A | KR 10-0152111 B1 (SAMSUNG ELECTRONICS CO., LTD.) 01 May 1999 (1999-05-01)<br>See claims 1-6; and figures 2-3. | 1-15 |
| A | JP 2018-206552 A (RINNAI CORP.) 27 December 2018 (2018-12-27)<br>See claim 1; and figures 1-5. | 1-15 |

☐ Further documents are listed in the continuation of Box C.　　☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 February 2024** | **15 February 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/018387**

| Patent document cited in search report | | | Publication date (day/month/year) | Patent family member(s) | | | Publication date (day/month/year) |
|---|---|---|---|---|---|---|---|
| WO | 2014-090864 | A1 | 19 June 2014 | CN | 105103652 | A | 25 November 2015 |
| | | | | CN | 105103652 | B | 22 March 2017 |
| | | | | EP | 2932794 | A1 | 21 October 2015 |
| | | | | EP | 2932794 | B1 | 08 March 2017 |
| KR | 10-0273027 | B1 | 01 December 2000 | KR | 10-1999-0076000 | A | 15 October 1999 |
| JP | 2010-262865 | A | 18 November 2010 | JP | 5078945 | B2 | 21 November 2012 |
| KR | 10-0152111 | B1 | 01 May 1999 | JP | 7057867 | A | 03 March 1995 |
| | | | | KR | 10-1995-0001198 | A | 03 January 1995 |
| JP | 2018-206552 | A | 27 December 2018 | JP | 6895809 | B2 | 30 June 2021 |

Form PCT/ISA/210 (patent family annex) (July 2022)